# EUROPEAN PATENT APPLICATION

(11) **EP 4 803 892 A1**
(43) Date of publication of application: **09.09.2026**
(21) Application number: 24885712.0
(22) Date of filing: 29.10.2024
(51) Int. Cl.: G01N 27/00, C12M 1/34

(54) **SENSOR, MEASUREMENT SYSTEM, AND MEASUREMENT METHOD**

(30) Priority: 30.10.2023 JP 2023185427
(71) Applicant: Institute of Science Tokyo, Tokyo 152-8550 (JP)
(72) Inventor: YAMAMOTO Takatoki, Tokyo 152-8550 (JP)
(74) Representative: Potter Clarkson
(86) International application number: PCT/JP2024/038540
(87) International publication number: WO 2025/094944

(57) **Abstract**

A sensor and a measurement system capable of quickly and accurately specifying a microscopic object to be measured with a simple structure are provided. A substrate (3) is made of a dielectric member. An electrode (1) is formed on a surface (3A) of the substrate (3). An electrode (2) is formed on a surface (3B) of the substrate (3). A microscopic channel (4) is formed on the substrate (3), through which an object to be measured dispersed in a solvent of a sample solution in contact with the surfaces (3A, 3B) of the substrate (3) can pass and to which a measurement voltage can be applied in a longitudinal direction by the electrodes (1, 2). The object to be measured is specified based on an electrical characteristic of the object to be measured at the time when the object to be measured has passed through the microscopic channel (4).

## Description

### Technical Field

The present disclosure relates to a sensor, a measurement system, and a measurement method.

### Background Art

As a method for detecting a virus, bacteria, a microorganism, or a viroid (hereinafter referred to simply as a virus and the like), for example, a polymerase chain reaction (PCR) method and an immunochromatographic method have been known. Conceivable examples of such microscopic objects (e.g., organisms) to be detected include, in addition to the aforementioned organisms, disease markers for various diseases such as cancers, and extracellular vesicles for information transmission (exosomes, micro-vesicles, and apoptotic vesicles of human or microbial origin). These samples have roughly a size of several ten to several hundred nanometers.

Meanwhile, as another type of detection method, a sensing method for a virus or the like by electrical measurement has been studied. Examples of electrical measurement methods include a technique in which viruses or the like to be detected are dispersed in water and these viruses or the like are detected as particles. In order to prevent infectious diseases or the like from occurring or spreading, it has been desired to detect viruses or the like in environments such as indoors, in a barn, and outdoors. The aforementioned electrical measurement method is suitable for sensing in such environments (see, for example, Patent Literatures 1 and 2).

As such an electrical measurement method, for example, a nanopore measurement technique in which an object to be measured that passes through a channel to which an AC (Alternating Current) voltage is applied is measured has been proposed (Patent Literature 3). In this technique, a constant AC voltage is applied between electrodes arranged so as to sandwich the path through which the object to be measured contained in a sample solution passes, and an AC current value and changes in the phase of the current with respect to the voltage are measured as AC characteristics at the time when the object to be measured has passed. Then, the object to be measured is measured and specified (i.e., identified) from a waveform representing the change in the AC current value over time and a waveform representing the change in the current phase over time.

### Citation List

### Patent Literature

[Patent Literature 1] Japanese Unexamined Patent Application Publication No. 2020-202824
[Patent Literature 2] Japanese Unexamined Patent Application Publication No. 2020-098211
[Patent Literature 3] Japanese Unexamined Patent Application Publication No. 2023-119181

### Summary of Invention

### Technical Problem

In the above-described nanopore measurement technique, the amounts of changes in the AC characteristics, i.e., the amount of change in the AC current value and the amount of change in the phase resulting from the passage of a particle(s), which is the object to be measured, is proportional to a ratio between the volume of the object to be measured and the volume of the nanopore space in the channel to which the AC voltage is applied. Therefore, in order to improve the sensitivity of the detection of the object to be measured, it is necessary to make the volume of the nanopore space close to the volume of the particle(s), which is the object to be measured. Therefore, a sensor for measuring the object to be measured is formed as one having a microscopic channel.

An ordinary nanopore measurement technique is aimed at measuring biomolecules. Therefore, a thin film having a thickness of several tens nanometers made of a highly rigid and highly brittle material such as silicon nitride (Si₃N₄) or silicon dioxide (SiO₂), or a sensor in which the channel is provided in a monomolecular film such as graphene is used. Such a thin film is susceptible to brittle fracture, and hence is one of the causes for limiting the utilization of nanopore measurement.

Meanwhile, there is a need to establish a nanopore measurement technique for measuring microorganisms such as a virus and bacteria the volumes of which are about 100 times or more of those of biomolecules. In a nanopore measurement technique for measuring microorganisms such as a virus and bacteria, it is necessary to overcome the above-described problem in regard to the durability of the thin film. such as brittle fracture, and thereby to improve the usability in the measurement.

The present disclosure has been made in view of the above-described circumstances, and an object thereof is to provide a sensor, a measurement system, and a measurement method capable of quickly and accurately specifying (i.e., identifying) a microscopic object to be measured with a simple structure.

### Solution to Problem

A sensor according to an aspect of the present disclosure includes: a dielectric member; a first electrode formed on a first surface of the dielectric member and made of conductive material; a second electrode formed on a second surface of the dielectric member and made of conductive material; and a microscopic channel formed in the dielectric member, through which an object to be measured dispersed in a solvent of a sample solution in contact with the first and second surfaces of the dielectric member can pass and to which an AC voltage for measurement can be applied in a longitudinal direction by the first and second electrodes, in which the object to be measured is specified based on an AC characteristic of the object to be measured at the time when the object to be measured has passed through the microscopic channel in a state where the AC voltage for measurement is applied thereto.

A measurement system according to an aspect of the present disclosure includes: a sensor configured to measure an object to be measured; a measurement unit configured to measure an AC characteristic of the object to be measured by applying an AC voltage for measurement to the sensor; and a processing unit configured to specify the object to be measured based on the AC characteristic measured by the measurement unit, in which the sensor includes: a dielectric member; a first electrode formed on a first surface of the dielectric member and made of conductive material; a second electrode formed on a second surface of the dielectric member and made of conductive material; and a microscopic channel formed in the dielectric member, through which an object to be measured dispersed in a solvent of a sample solution in contact with the first and second surfaces of the dielectric member can pass and to which the AC voltage for measurement can be applied in a longitudinal direction by the first and second electrodes, in which the object to be measured is specified based on an AC characteristic of the object to be measured at the time when the object to be measured has passed through the microscopic channel in a state where the AC voltage for measurement is applied thereto.

A measurement method according to an aspect of the present disclosure includes: applying an AC voltage for measurement in a longitudinal direction of a microscopic channel formed in a dielectric member, through which an object to be measured dispersed in a solvent of a sample solution in contact with a first surface and a second surface of the dielectric member can pass, by a first electrode formed on the first surface of the dielectric member and made of conductive material and a second electrode formed on the second surface of the dielectric member and made of conductive material, and specifying the object to be measured based on an AC characteristic of the object to be measured at the time when the object to be measured has passed through the microscopic channel in a state where the AC voltage for measurement is applied thereto.

### Advantageous Effects of Invention

According to the present disclosure, it is possible to provide a sensor, a measurement system, and a measurement method capable of quickly and accurately specifying a microscopic object to be measured with a simple structure.

### Brief Description of Drawings

Fig. 1 schematically shows a structure of a measurement system according to a first embodiment.
Fig. 2 is a perspective view schematically showing a structure of a sensor.
Fig. 3 shows a connection relationship between the sensor and a measurement unit.
Fig. 4 is a perspective view showing droplets formed in the sensor.
Fig. 5 shows a flow through a microscopic channel.
Fig. 6 schematically shows an example of a structure of a measurement unit.
Fig. 7 shows an example of a solution holding structure provided in the sensor.
Fig. 8 is a flowchart of measurement of an object to be measured in the measurement system according to the first embodiment.
Fig. 9 is a graph showing AC characteristics measured in the measurement system according to the first embodiment.
Fig. 10 is a graph showing a relationship between the particle diameter of the object to be measured and the change in the current value.
Fig. 11 shows the particle diameter distribution of bacteria.
Fig. 12 shows a confusion matrix representing bacteria classification performance.
Fig. 13 shows a confusion matrix representing inactivated-virus classification performance.
Fig. 14 shows a confusion matrix representing exosome classification performance.
Fig. 15 shows a confusion matrix representing pollen classification performance.
Fig. 16 shows an example in which a sensor is held in an electrophoresis method.
Fig. 17 schematically shows the direction of movement of an object to be measured and a waveform observed in an electrophoresis method.
Fig. 18 shows an example of results of measurement of a current waveform by an electrophoresis method.
Fig. 19 schematically shows a structure of a sensor according to a third embodiment.
Fig. 20 shows a method for using the sensor according to the third embodiment.
Fig. 21 is a graph showing results of measurement of the number of bacteria.
Fig. 22 is a front view schematically showing a structure of a sensor according to a fourth embodiment.
Fig. 23 is a cross-sectional diagram showing a distance between electrodes of the sensor according to the first embodiment.
Fig. 24 is a cross-sectional diagram showing a distance between electrodes of a sensor according to a fourth embodiment.
Fig. 25 is a front view schematically showing a structure of a sensor according to a fifth embodiment.
Fig. 26 shows a first modified example of the arrangement of electrodes.
Fig. 27 shows a second modified example of the arrangement of electrodes.

### Description of Embodiments

Embodiments according to the present invention will be described hereinafter with reference to the drawings. The same reference numerals are assigned to the same elements throughout the drawings, and redundant descriptions will be omitted as appropriate.

In the following description, "an embodiment" means that the present invention can be applied to any one of the embodiments described hereinafter or a combination of two or more of the embodiments, and also means that the present invention is not limited to any particular embodiment.

### First Embodiment

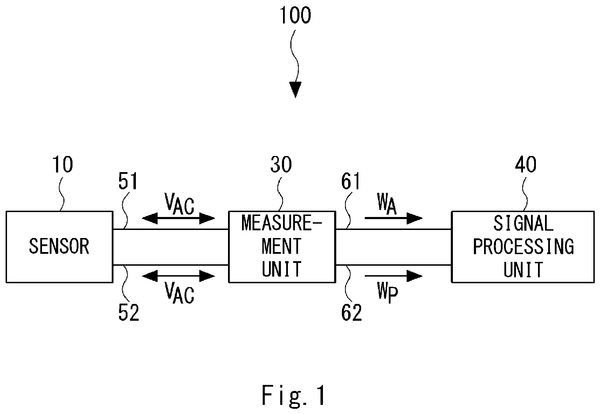

Here, for an object to be measured in the form of microscopic particles such as a virus, bacteria, a microorganism, or a viroid (hereinafter referred to simply as a virus or the like), a measurement system for measuring mainly bacteria and a particle(s) having a size close to that of bacteria by a nanopore measurement method will be described hereinafter. Fig. 1 schematically shows a configuration of a measurement system 100 according to a first embodiment. The measurement system 100 according to the first embodiment includes a sensor 10, a measurement unit 30, and a signal processing unit 40.

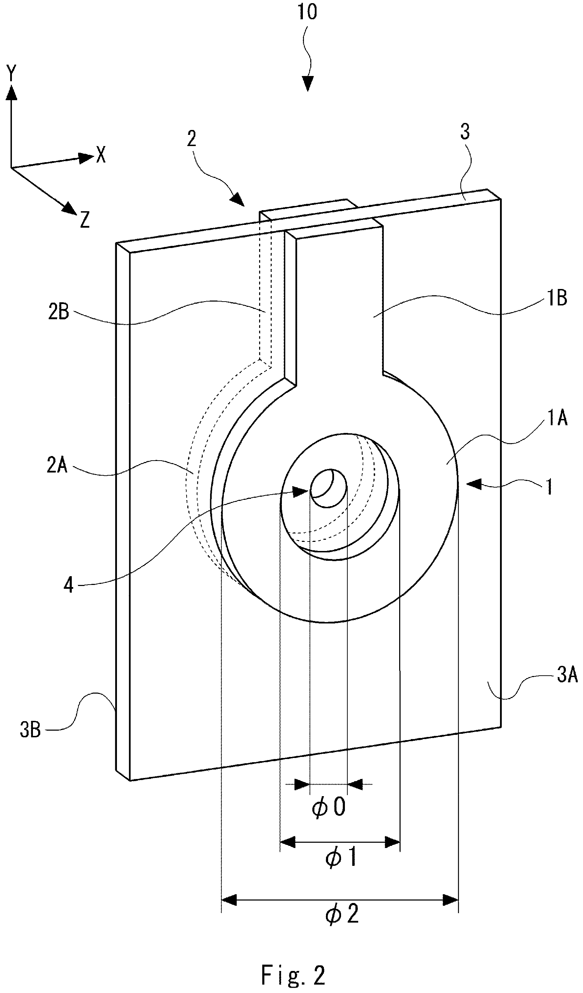

The sensor 10 is formed as a sensor for measuring objects to be measured dispersed in a solution. Fig. 2 is a perspective view schematically showing the structure of the sensor 10. In Fig. 2, the vertical direction from the bottom of the paper to the top thereof is defined as a Y direction. Further, the horizontal direction toward the right and perpendicular to the Y direction is defined as an X direction. Further, the direction perpendicular to the X and Y directions is defined as a Z direction. Since Fig. 2 is a perspective view, the X direction is shown as a direction slightly inclined upward and to the right with respect to the horizontal direction of the paper, and the Z direction is shown as a direction inclined downward and to the right with respect to the normal direction of the paper. Electrodes 1 and 2 are respectively provided on opposite surfaces of a substrate 3 which is formed of a plate-like non-conductive member.

The sensor 10 includes the electrodes 1 and 2 and the substrate 3. In Fig. 2, the substrate 3 is formed as a rectangular plate-like dielectric member of which the main surface is parallel to the X-Y plane. In order to prevent the electrodes 1 and 2 from being peeled, the substrate 3 is preferably made of a material having dimensional stability equivalent to, for example, silicon or glass, in particular, having a low coefficient of linear expansion, and having excellent mechanical strength, smoothness, and flexibility. Further, since the substrate 3 is sandwiched between the electrodes 1 and 2, it is preferably made of a dielectric material having excellent electrical characteristics, in particular, a low dielectric constant. Therefore, in this example, polyimide was used as the material of the substrate 3. It is desired that the polyimide to be used have, for example, a coefficient of linear expansion of 3 ppm/K or lower, an arithmetic mean surface roughness of about 0.5 nm, a relative dielectric constant of 3.3, and a volume resistivity of 10¹⁶ Ωcm or higher. Further, the thickness of the substrate 3 was 15 µm.

The electrode 1 is formed on a surface 3A on the +Z side of the substrate 3. The electrode 2 is formed on a surface 3B on the -Z side of the substrate 3. Note that the electrode 1 is also referred to as a first electrode, and the electrode 2 is also referred to as a second electrode. The surface 3A is also referred to as a first surface, and the surface 3B is also referred to as a second surface. In this structure, the electrodes 1 and 2, which are arranged to be opposed to each other with the substrate 3 interposed therebetween, are formed as electrodes having the same shape and the same dimensions. The electrode 1 is formed by a ring electrode 1A provided at the center of the substrate 3 and a lead wiring line 1B extending from the ring electrode 1A in the Y direction. Similarly, the electrode 2 has a structure similar to that of the electrode 1 and is formed by a ring electrode 2A provided at the center of the substrate 3 and a lead wiring line 2B extending from the ring electrode 2A in the Y direction. The electrodes 1 and 2 are arranged so that the ring electrodes 1A and 2A are concentric with each other. The lead wiring lines are also referred to simply as wiring parts. Further, the lead wiring line 1B is also referred to as a first wiring part, and the lead wiring line 2B is also referred to as a second wiring part.

In this embodiment, each of the electrodes 1 and 2 is formed as a thin-film electrodes made of silver (Ag). The electrodes 1 and 2 may be formed on the substrate 3 by using any of various manufacturing methods. For example, the electrodes 1 and 2 may be manufactured by patterning the shapes of the electrodes 1 and 2 with Ag nano ink (KGK NANO AGK 104, Kishu Giken Kogyo Co., Ltd.) by using an inkjet processing apparatus (Sub-femto inkjet processing apparatus, SIJ Technology, Inc.), and then sintering it at 180°C for 90 minutes. Note that the heat-resistant temperature of Xenomax of which the substrate 3 is made is 500°C or higher, so that the electrodes 1 and 2 can be manufactured without being deformed even at a processing temperature at which warping occurs in the case of ordinary polyimide. Further, since polyimide such as Xenomax is brownish and transparent, the electrodes 1 and 2, which are opposed to each other with the substrate 3 interposed therebetween, can be seen therethrough, so that the positions of the centers of the ring electrodes 1A and 2A can be easily aligned with each other. Note that the method for manufacturing electrodes is not limited to the above-described method. That is, the electrodes may be manufactured by using a patterning method such as photolithography or a film forming method such as vacuum deposition, chemical vapor deposition (CVD: Chemical Vapor Deposition), and plating. The electrodes may be manufactured by using an ordinary technique for manufacturing wiring lines on a substrate such as a flexible printed wiring substrate.

In the substrate 3, a microscopic channel 4, which is a hole through which the object to be measured passes, is formed so that it is concentric with the ring electrodes 1A and 2A. The microscopic channel 4 may be formed in the substrate 3 by using any of various manufacturing methods. For example, the microscopic channel 4 may be formed in the substrate 3 by a laser processing machine. In this case, for example, the microscopic channel 4 may be formed at the center of the ring electrodes 1A and 2A by concentrating continuous wave (CW: continuous wave) laser light of a TEM00 mode having a wavelength of 405 nm and an optical output of 70 mW by an objective lens having an NA of 0.45 and irradiating the substrate 3 with the concentrated laser light for 0.1 seconds while observing the regions on the inner sides of the ring electrodes 1A and 2A with an optical microscope.

The diameter φ0 of the microscopic channel 4 and the inner diameter φ1 and the outer diameter φ2 of the ring electrodes 1A and 2A can be designed as arbitrary values suitable for the dimensions of the object to be measured. In this embodiment, it is assumed that bacteria are the object to be measured, and their dimensions are about several micrometers. Accordingly, in this embodiment, the diameter φ0 of the microscopic channel 4 was set to 3 µm in consideration of the sensitivity of the detection of ordinary bacteria and the prevention of clogging of the microscopic channel 4. Further, the inner diameter φ1 of the ring electrodes 1A and 2A was set to 1 mm and the outer diameter φ2 thereof was set to 3 mm in consideration of the formation of droplets (which will be described later).

The electrodes 1 and 2 are provided in order to apply an AC voltage in the longitudinal direction of the microscopic channel 4, and have ring-shaped parts surrounding the microscopic channel 4 in the above-described example. However, the shape of the electrodes is not limited to this example. That is, as long as the electrodes surround the microscopic channel 4, they may have, in addition to circles, various types of annular shapes such as ellipses, other types of closed curves, and closed polygons. Further, as long as the electrodes can suitably apply an AC voltage to the microscopic channel 4, they may have a partially opened annular shape such as a partially open curve such as a C-shape and a partially open polygon. Further, as long as the electrodes can suitably apply an AC voltage to the microscopic channel 4, they are not limited to closed or opened annular shapes, and may have any other various shapes.

The microscopic channel 4 is preferably a hole having a circular cross-sectional shape when viewed along the longitudinal direction (Z direction), but may have any of various cross-sectional shapes as long as it penetrates the substrate and the object to be measured can pass therethrough. Further, the microscopic channel 4 preferably has a cross section having at least such a dimension that the object to be measured can pass therethrough. Further, the microscopic channel 4 preferably has a cross section having a dimension that is several times the dimension of the object to be measured, for example, three times the dimension of the object to be measured. Further, the microscopic channel 4 may have such a shape that its cross-sectional shape changes along the longitudinal direction. For example, the microscopic channel 4 may have a conical shape in which the dimension of the cross-sectional shape increases from one end the microscopic channel 4 to the other end thereof in the longitudinal direction. When the microscopic channel 4 has a circular cross section, for example, the microscopic channel 4 may be formed as a channel having a truncated cone shape in which the diameter of the circular cross section increases from one end the microscopic channel 4 to the other end thereof in the longitudinal direction.

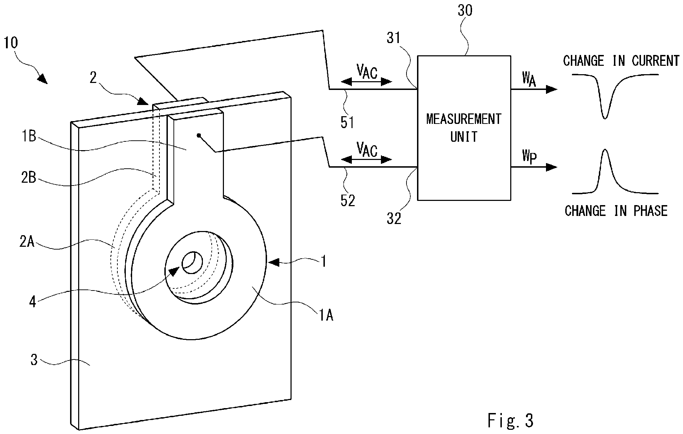

The measurement unit 30 is configured to apply an AC voltage used for the measurement of the object to be measured to the sensor 10 and measure changes occurring in the AC voltage. Fig. 3 shows a connection relationship between the sensor 10 and the measurement unit 30. The lead wiring line 2B of the sensor 10 and one terminal 31 of the measurement unit 30 are connected by a wiring line 51. The lead wiring line 1B of the sensor 10 and the other terminal 32 of the measurement unit 30 are connected by a wiring line 52.

Next, the relationship between the sensor 10 and an object to be measured will be described. In this structure, AC characteristics at the time when the object to be measured 5 passes through the microscopic channel 4 are measured in a state where the AC voltage is applied to the electrodes 1 and 2 by the measurement unit 30. Then, the measurement unit 30 specifies (i.e., identifies) the object to be measured 5 based on the changes in the measured AC characteristics, i.e., the changes in the waveform occurring in the measured AC current. Note that although an example in which the waveform of the AC current is measured as the AC characteristic will be described here, the waveform of the AC voltage may be measured as required.

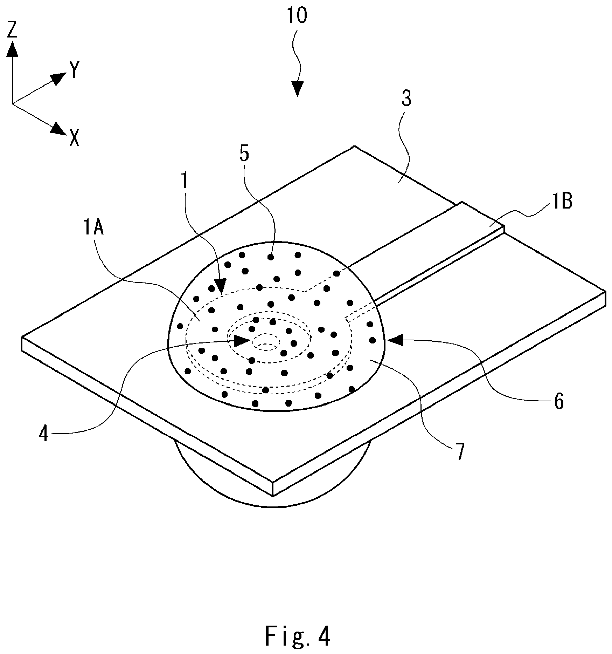

A method for bringing a sample solution into contact with the microscopic channel 4 will be described. Fig. 4 is a perspective view showing droplets formed in the sensor 10. In Fig. 4, the electrode 1 of the sensor 10 faces upward, and droplets 6 of the sample solution containing objects to be measured 5 dispersed in the solvent 7 are formed so as to cover the ring electrodes 1A and 2A.

In this structure, the droplets 6 can be formed and held by using the difference between the surface tension of the substrate 3 made of hydrophobic polyimide and that of the electrodes 1 and 2 made of hydrophilic silver. For example, the droplets 6 can be formed by dropping the sample solution at the center of each of the ring electrodes 1A and 2A while reversing the sensor 10 upside down. For example, when it is desired to improve the hydrophilicity, a hydrophilization treatment may be performed for the electrodes 1 and 2 made of silver by irradiating their insides with vacuum ultraviolet light, atmospheric plasma, or the like. Alternatively, a treatment using a hydrophilic coating agent may be performed for the insides of the electrodes 1 and 2. Note that even when the surfaces of the electrodes are coated by the hydrophilic treatment, the measurement can be properly performed because the structure disclosed herein is for performing AC measurement. It can be appreciated that this feature is one of the advantages of the structure for performing AC measurement disclosed herein.

In this case, the ring electrodes 1A and 2A are preferably formed with sufficiently small dimensions so that the dropped sample solution (i.e., the droplets) does not spill out. On the other hand, as the dimensions of the droplets 6 become smaller, the ratio of the surface area to the volume increases, and as a result, the evaporation rate of the solvent increases. That is, there is a trade-off between the structural stability of the droplets 6 and the evaporation rate. Therefore, under the assumption that the practical measurement time is about several minutes, we have studied the appropriate size of the droplets so that the error on the measurement caused by the evaporation becomes 0.1% or smaller under an environment of a humidity of 50% and a temperature of 23°C. Accordingly, the inner diameter φ1 of the ring electrodes 1A and 2A was set to 1 µm, and the outer diameter φ2 thereof was set to 3 µm as described above. Note that under these conditions, the amount of the sample solution dropped onto each of the ring electrodes 1A and 2A was 20 to 40 µL.

Note that the method for forming droplets described above is merely an example. For example, when the sensor 10 is submerged in a sample solution in which objects to be measured 5 are dispersed and then pulled up along the vertical direction, droplets 6 remain on the inner sides of the ring electrodes 1A and 2A due to the difference between the hydrophilicity of the electrodes 1 and 2 and that of the substrate 3. After that, the sensor 10 is rotated so that the main surface of the substrate 3 is perpendicular to the horizontal direction while preventing the droplets 6 from spilling out, the droplets 6 similar to those described above may be formed. According to this droplet forming method, the working time can be shortened compared with the case where droplets are formed on both surfaces of the substrate by the above-described method, so that the droplets can be formed more easily.

As described above, it is assumed that the object to be measured is bacteria, but the object to be measured is not limited to this example. For example, the object to be measured may be a biological sample such as a virus or a microorganism, or may be an object other than biological samples as long as objects to be measured can be dispersed in the solvent 7. Further, any of various solvents such as an ionic liquid and water may be used as the solvent 7.

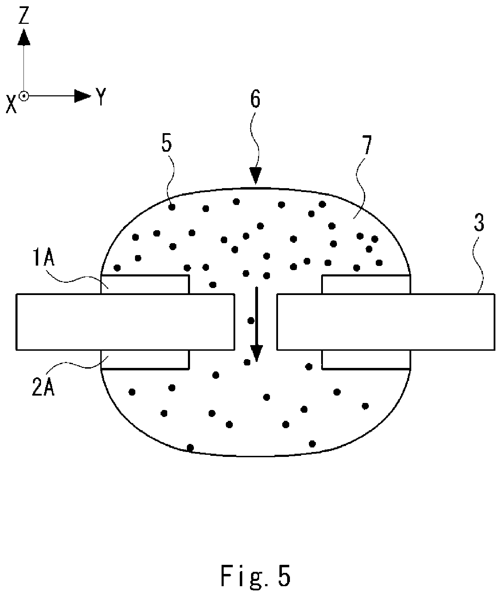

As an example of the method for making the object to be measured 5 contained in the formed droplets 6 pass through the microscopic channel 4, a gravity-driven method will be described. Fig. 5 shows a flow that passes through the microscopic channel 4. When the sensor 10 is held in such a manner that the electrode 1 faces upward in a state where droplets 6 are formed, a microscopic flow from the droplet formed on the electrode 1 toward the droplet formed on the electrode 2 through the microscopic channel 4 is formed by gravity. By this flow, the object to be measured 5 passes through the microscopic channel 4 from the droplet formed on the electrode 1 toward the droplet formed on the electrode 2.

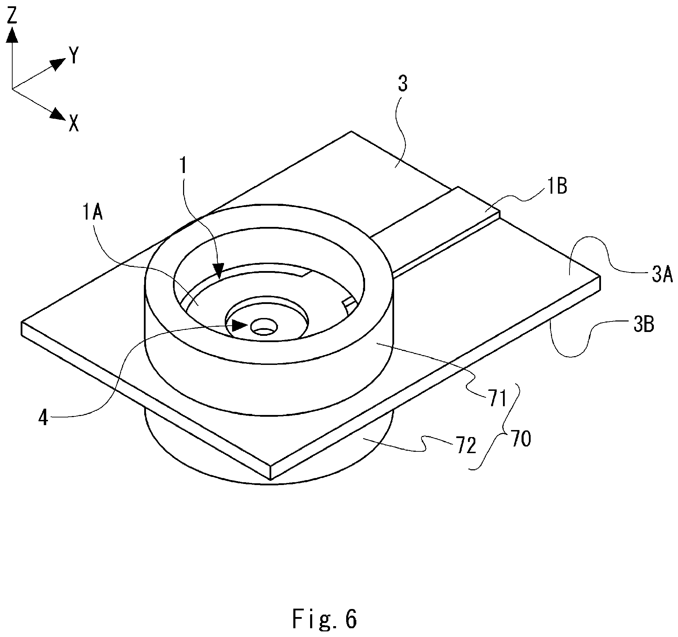

Further, a solution holding structure for holding a sample solution may be provided in the sensor. Fig. 6 shows an example of a solution holding structure provided in the sensor. In this example, a cylindrical solution holding member 71 made of a non-conductive material is provided on the surface 3A of the substrate 3 on which the electrode 1 is provided in such a manner that the solution holding member 71 is concentric with the electrode 1 and the microscopic channel 4. Further, a cylindrical solution holding member 72 made of a non-conductive material is provided on the surface 3B of the substrate 3 on which the electrode 2 is provided in such a manner that the solution holding member 72 is concentric with the electrode 1 and the microscopic channel 4. The solution holding members 71 and 72 are referred to as a solution holding structure(s) 70 hereinafter. By dropping the sample solution at the center of the solution holding member 71 provided as described above, a larger amount of the sample solution can be held on the sensor than that in the example shown in Figs. 4 and 5. In this way, the influence of the evaporation of the sample solution can be reduced, and by increasing the amount of the sample solution, the driving force for forming the flow through the microscopic channel 4 can be increased. Further, the solution holding member 72 provided on the opposite surface can also hold a larger amount of the sample solution than that in the examples shown in Figs. 4 and 5 by the surface tension, so that the influence of the evaporation of the sample solution can also be reduced on this side.

Note that the solution holding structure shown in Fig. 6 is merely an example, and any of various structures may be used as long as it is provided on one or both of the substrate and the electrode and can hold the sample solution.

As described above, in the state in which the phenomenon that the object to be measured 5 passes through the microscopic channel 4 occurs, the AC characteristics of the object to be measured 5 are measured by the measurement unit 30, and the signal processing unit 40 specifies (i.e., identifies) the object to be measured 5 by using the measured AC characteristics.

The measurement unit 30 may have any structure capable of measuring the AC characteristics of the object to be measured 5. The measurement unit 30 is configured so as to be able to apply an AC voltage having a frequency of several kHz to several GHz, preferably 1 kHz to 100 MHz, and more preferably 1 MHz to 10 MHz to the electrodes 1 and 2.

The measurement unit 30 may measure the AC voltage by a lock-in amplifier having an excellent detecting capability for microscopic repetitive signals in order to ensure the tolerance to noises. For example, the measurement unit 30 can extract the in-phase component of the AC voltage and phase components shifted from the in-phase component by the lock-in amplifier. In other words, the measurement unit 30 may obtain the measured AC current value (or combined impedance) and the change in the phase of the current with respect to the voltage.

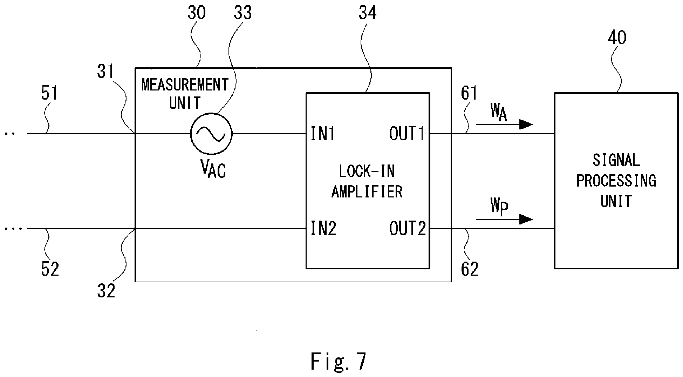

Fig. 7 schematically shows an example of the configuration of the measurement unit 30. The measurement unit 30 includes a signal source 33 and a lock-in amplifier 34. The signal source 33 is inserted between the terminal 31 of the measurement unit 30, which is connected to the electrode 2, and the input terminal IN1 of the lock-in amplifier. The signal source 33 is configured to output an AC voltage V_{AC} having an arbitrary frequency which is applied between the electrodes 1 and 2. The input terminal IN2 of the lock-in amplifier is connected to the terminal 32 of the measurement unit 30, which is connected to the electrode 1.

The structure and operation of the lock-in amplifier 34 are similar to those of an ordinary lock-in amplifier. Note that the lock-in amplifier 34 measures AC characteristics, i.e., a waveform representing changes in the AC current value over time and a waveform representing the phase of the AC current. The lock-in amplifier 34 outputs a waveform W_{A} representing the change in the AC current value over time and a waveform W_{P} representing the phase of the AC current to the signal processing unit 40.

The signal processing unit 40 specifies (i.e., identifies) the object to be measured based on the waveform representing the change in the AC current value over time, which indicates the AC characteristics, and the waveform representing the phase of the AC current, both of which are measured by the measurement unit 30. The signal processing unit 40 receives the waveform W_{A} representing the change in the AC current value over time and the waveform W_{P} representing the phase of the AC current, both of which are measured by the measurement unit 30, through wiring lines 61 and 62.

The signal processing unit 40 may specify (i.e., identify) the object to be measured 5, for example, by applying machine learning. The signal processing unit 40 may construct, by inputting AC characteristics of objects to be measured for learning, measured in advance and information on the objects to be measured for learning into a model as teacher data and thereby performing supervised learning, a trained model which can be used to specify (i.e., identify) an unknown object to be measured. In this way, the signal processing unit 40 can specify the object to be measured 5 by using an output from the trained model obtained by inputting the measured AC characteristic into the trained model. Note that, needless to say, even in this case, the measured AC current value and the phase may be input as the AC characteristics.

In the machine learning, for example, a neural network may be used as a model. For example, machine learning using a CNN (Convolution Neural Network) or an LSTM (Long Short Term Memory) may be applied.

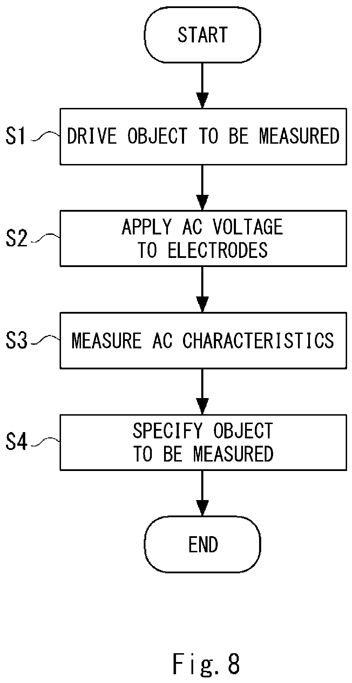

Next, operations that are performed when the object to be measured 5 is measured by using the measurement system 100 according to this embodiment will be described. Fig. 8 is a flowchart of measurement of the object to be measured by the measurement system 100.

Firstly, objects to be measured 5 dispersed in the solvent 7 are made to flow through the microscopic channel 4 by the above-described droplet method (Step S1). Next, an AC voltage is applied between the electrodes 1 and 2 by the measurement unit 30 (Step S2). Note that, for example, the measurement unit 30 applies an AC voltage V_{AC} having a frequency of 1 kHz to 100 MHz to the electrodes 1 and 2. After that, AC characteristics are measured (Step S3), and the object to be measured 5 is specified based on the measured AC characteristics (Step S4).

Note that although the above description has been given on the assumption that the AC voltage is applied to the electrodes 1 and 2 after objects to be measured 5 dispersed in the solvent 7 are made to pass through the microscopic channel 4, this is merely an example. Objects to be measured 5 dispersed in the solvent 7 may be made to pass through the microscopic channel 4 after the AC voltage is applied to the electrodes 1 and 2.

As described above, according to the structure disclosed herein, it is possible to realize a sensor in which electrodes are provided on a substrate having sufficient mechanical strength. As a result, it is possible to solve the problem in the ordinary nanopore measurement technique, such as the breakage of a highly rigid and highly brittle thin film such as one made of silicon nitride, and thereby to provide a sensor having excellent durability.

In the measurement in the AC nanopore method in which the measurement is performed by applying an AC voltage, it is desirable to reduce the capacitance of the substrate made of a dielectric and to increase the cutoff frequency in order to broaden the frequency band. Therefore, according to the structure disclosed herein, the substrate made of a dielectric can be formed as a thick member as compared with that in an ordinary nanopore measurement technique, so it is advantageous because the frequency band can be broadened.

Further, since the substrate can be formed as a thick member, the choices of the material of which the substrate is made, the choices of the structure of the sensor, and the choices of the manufacturing method can be increased. As a result, the degree of freedom of the design of the sensor can be increased.

An example of the measurement of the particle diameter of the object to be measured in the structure disclosed herein will be described. In the example described below, MFIA 5MHz available from Zurich instruments was used as a measuring instrument including a lock-in amplifier. The setting of the low-pass filter in the lock-in amplifier was fifth order and the bandwidth was 1 kHz. The measurement voltage was 0.5 Vpp. When it is necessary to drive particles by electrophoresis, a DC (Direct Current) bias voltage up to 2 V was applied. A tweezer probe (L2001, HIOKI) was used for the connection between the sensor and the measuring instrument.

In the signal processing unit 40, a trained model using a CNN was constructed. In the embodiment described below, since the number of data obtained by measurement using the CNN differs according to the bacteria, a larger weight was given to bacteria of which the number of data is small, and by doing so, preventing the generalization performance from deteriorating due to non-uniformity of data. As the learning data, the values of respective points constituting each waveform were transformed into a one-dimensional array and directly used as data of an input layer. The CNN was constructed by combining six convolutional layers, a batch normalization layer, and a pooling layer. A LeRU function was used as the activation function. During the learning, 60% of the whole measured data was used as learning data; 20% thereof was used as validation data; and the remaining 20% thereof was used as testing data. The generalization performance of the constructed classifier was evaluated by five-fold cross-validation using the accuracy of prediction values as an evaluation index.

Phosphate-buffered physiological salt solution (17-516Q, Lonza) having a pH of 7.4 and a conductivity of 17 mS/cm was used as the solvent, and a sample solution was prepared by dispersing objects to be measured in this solvent. In order to prevent the aggregation of the objects to be measured, the sample solution was stirred for 10 seconds or longer by a vortex mixer immediately before the measurement, and then used for the measurement.

### Example 1: Measurement of Single Type of Particle

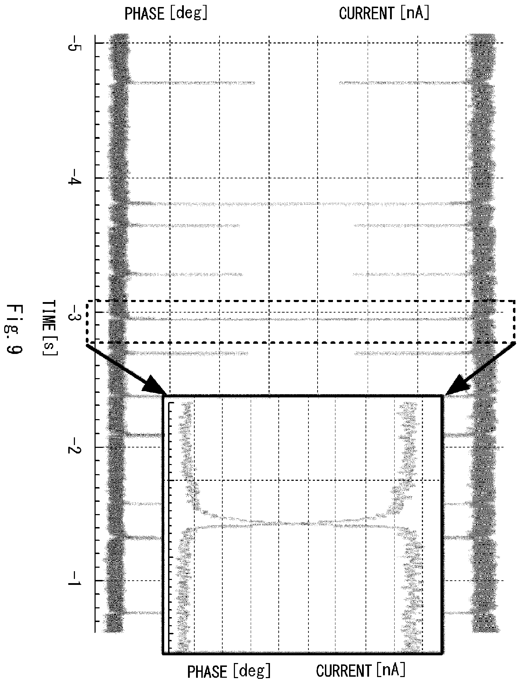

Fig. 9 is a graph showing AC characteristics measured by the measurement system according to this embodiment, and shows AC characteristics measured by using a lock-in amplifier. That is, Fig. 9 shows the time response waveforms of the current and the phase change, respectively. In this example, polystyrene particles (CPC1000) having a diameter of 940 nm were used as the object to be measured.

In Fig. 9, the waveform on the upper side shows the absolute value of the current, and the waveform on the lower side shows the phase of the current with respect to the applied voltage. Since the path to which the AC voltage is applied is blocked by a particle(s) passing through the microscopic channel 4, the observed current decreases, so that a downward current spike waveform occurs. Meanwhile, regarding the phase, an upward spike waveform (i.e., phase advances) occurs as the object to be measured passes, and it can be understood that the CPC1000 particle, which is the object to be measured, exhibits a capacitive response. Further, the change in the current and the change in the phase synchronously occur, so that it can be understood that these changes originate from the same particle. As described above, according to the structure disclosed herein, an event in which the object to be measured passes through the microscopic channel 4 is observed as a waveform in which the change in the current and the change in the phase synchronously appear.

### Example 2: Measurement of Particle Diameter

In this measurement, the change in the current is proportional to the volume of the particle, i.e., the cube of the particle diameter. For example, when the particle diameter becomes 1/10, the signal strength, i.e., the amount of change in the current, becomes 1/1,000. Therefore, the particle size that can be measured with one hole diameter greatly depends on various noises and the structure of the measurement system as the particle diameter decreases. Therefore, in this embodiment, by using a lock-in amplifier with a large dynamic reserve (allowable noise current/measurement current), the range of particle diameters that can be measured with a hole diameter of 3 µm was evaluated. In particular, the smallest particle diameter that can be measured with a hole diameter of 3 µm is evaluated.

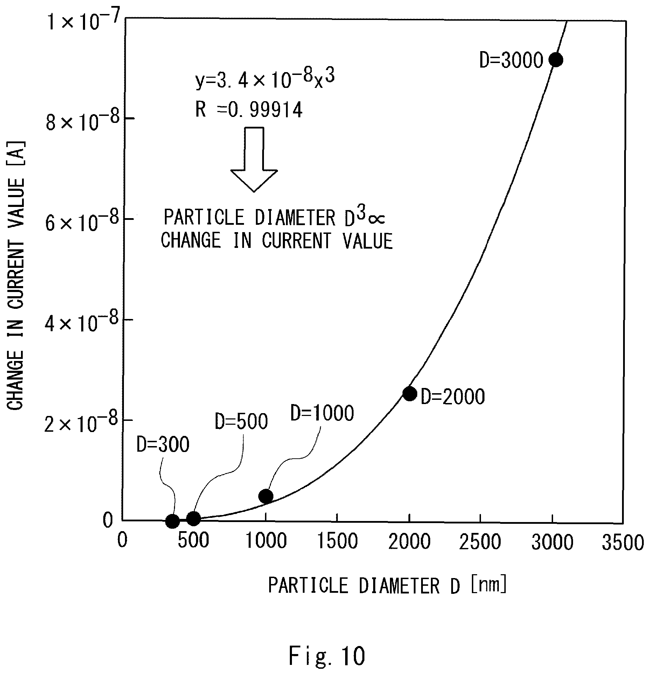

Fig. 10 is a graph showing a relationship between the particle diameter of the object to be measured and the change in the current value. In Fig. 10, the horizontal axis indicates the particle diameter, and the vertical axis indicates the amount of change in the current value. In Fig. 10, it was confirmed that based on the fact that the R² value of the approximate curve obtained by fitting using third-power regression equation for measured values was 0.999 or higher, the measured current value conforms to the analytically-obtained third-power law for the particle diameter. Further, it was also confirmed that particles having diameters from about 300 nm to 3 µm could be measured with one hole diameter. This means that signals of which the strengths differ by a factor of 1,000 can be linearly measured, thus demonstrating the advantage of the lock-in amplifier. Therefore, according to the structure disclosed herein, measurement over a wide range of particle diameters can be carried out compared with other measurement methods. Note that even when a particle having a particle diameter of 3 µm was made to pass through the microscopic channel 4 having an inner diameter of 3 µm, the microscopic channel 4 is not blocked by the particle and hence the measurement can be performed. Therefore, it was inferred that the actual hole diameter was slightly larger than 3 µm in the range of errors of the SEM observation.

### Example 3: Measurement of Dimension of Bacterium and Classification Thereof

Measurement of dimensions of bacteria was performed under conditions similar to those in Example 2. In this example, ten types of bacteria obtained from Akita Konno Co., Ltd. were used as objects to be measured. The scientific names and product numbers of the ten bacteria are Lacrobacillus plantarum (L1315), Enterococcus faecalis (L1390), Leuconostoc mesenteroid (L1789), Pediococcus pentosaceus (L4140), Lacrococcus lactis (L1181), Lacrobacillus fermentum (L1295), Weissella paramesentero (L1790), Enterococcus faecium (L1995), Pediococcus acidilactic (L3324), and Lactobacillus pentosus (L1317). In order to suppress the influence of the variations in the growth rate depending on the type of bacteria, these bacteria were cultivated in an MRS (de Man, Rogosa, Sharpe) culture medium (Lactobacillus MRS Broth, Becton, Dickinson and Company) at a temperature of 30°C for about 24 hours, and then a sample solution was prepared by substituting a measurement solution therefor.

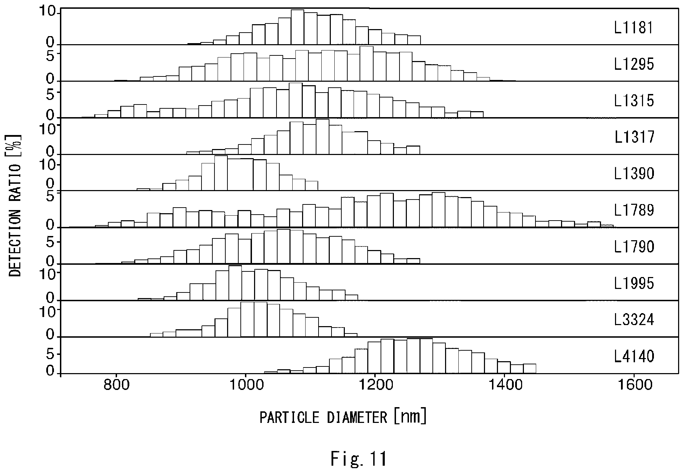

Fig. 11 shows a distribution of particle diameters of bacteria. Since the number of detected bacteria depends on the type of bacteria, the values on the vertical axis were normalized so that the total number of detected bacteria becomes 100% for each type of bacteria. Since the shape of bacteria is non-spherical, the particle diameter was calculated as the equivalent diameter of an isovolumetric sphere, and calibrated by using data of CPC1000 (particle diameter of 940 nm). In this example, the particle diameters of bacteria are distributed in a range of about 800 nm to 1.5 µm. It can be understood that since the particle diameters of different types of bacteria overlap one another, it is difficult to distinguish the type of bacteria based solely on the information on the particle diameter.

In this embodiment, the time required for measuring the particle diameter of each type of bacteria, i.e., the time from when the sample solution is dropped onto the sensor and thereby forming droplets thereon to the completion of the measurement, was about several minutes. Therefore, it was confirmed that the particle diameter of an object to be measured could be easily measured in a short time in the structure disclosed herein.

Although the particle diameters of the above-described ten types of bacteria were measured by using the same sensor, the blockage of the microscopic channel 4 rarely occurred during the measurement. Further, even when the microscopic channel 4 was blocked, the blockage could be eliminated just by mechanically shaking the sensor slightly with tweezers or the like, so that the measurement could be performed again. Note that based on the fact that the deviation of the measurement signal after the recovery from the measurement signal before the recovery was 10 ppm or smaller, it was inferred that no partial blockage or constriction occurred.

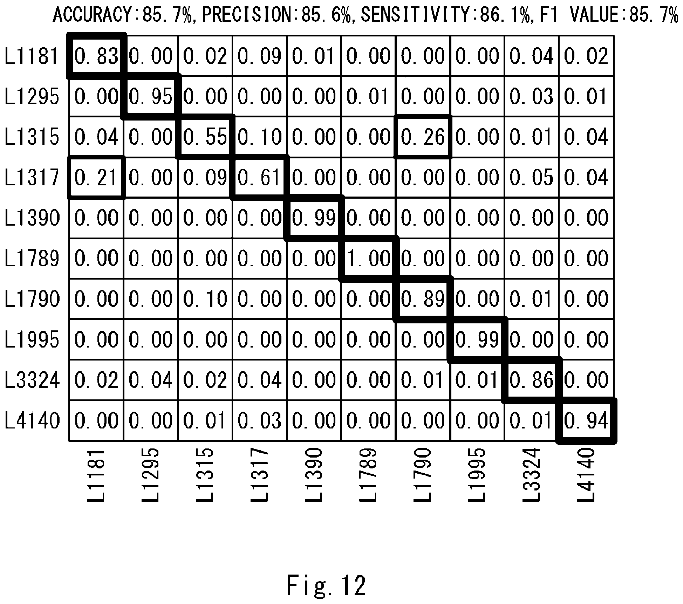

Next, the classification of bacteria performed by the signal processing unit 40 in Example 3 will be described. Fig. 12 shows a confusion matrix representing bacteria classification performance. In Fig. 12, the horizontal axis indicates the predicted value, and the vertical axis indicates the correct value. The values in the matrix are the accuracies and correspond to the depth of the color. In this matrix, the deeper the color depth of the diagonal line toward the lower right is, the higher the accuracy is and hence the higher the classification performance is. The ten types of bacteria were classified by the above-described classifier using the CNN, and it was possible to achieve Accuracy of 85.7%, Precision (also referred to relevance ratio) of 85.6%, Sensitivity (also referred to as Recall) of 86.1%, and F1 value of 85.7%. Therefore, it was confirmed that it was possible to accurately specify the type of bacteria by combining the measurement according to this embodiment and the classification of bacteria by the CNN classifier.

### Example 5: Classification of Inactivated Virus

In this example, four types of inactivated viruses, i.e., two types of influenza A (H1N1 and H3N2), influenza B, and RS (Respiratory Syncytial) virus, were used as objects to be measured.

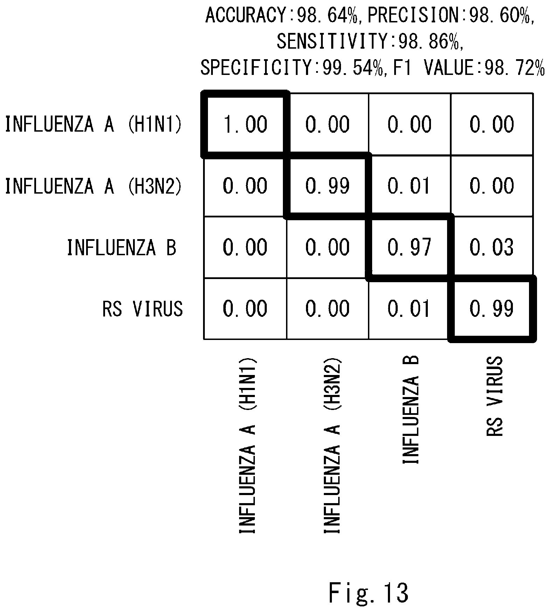

Fig. 13 shows a confusion matrix representing inactivated virus classification performance. In Fig. 13, the horizontal axis indicates the expected value, and the vertical axis indicates the correct value as in Fig. 12. The four types of inactivated viruses were classified by the above-described classifier using the CNN. Accuracy was 98.64%; Precision was 98.60%; Sensitivity was 98.86%; Specificity was 99.54%; and F1 value was 98.72%. Therefore, even when the object to be measured was an inactivated virus, it was possible to accurately specify the type of inactivated virus by combining the measurement according to this embodiment and the classification by the CNN classifier.

### Example 6: Classification of Exosome

In this embodiment, seven types of exosomes, i.e., COLO1 (human colorectal cancer), MM1 (human melanoma), SK-N-SH (human neuroblastoma), HCT116 (human colorectal cancer), PC3 (human prostate cancer, grade IV), A549 (lung cancer), and K-562 (chronic myelogenous leukemia (pleural effusion)), were used as objects to be measured.

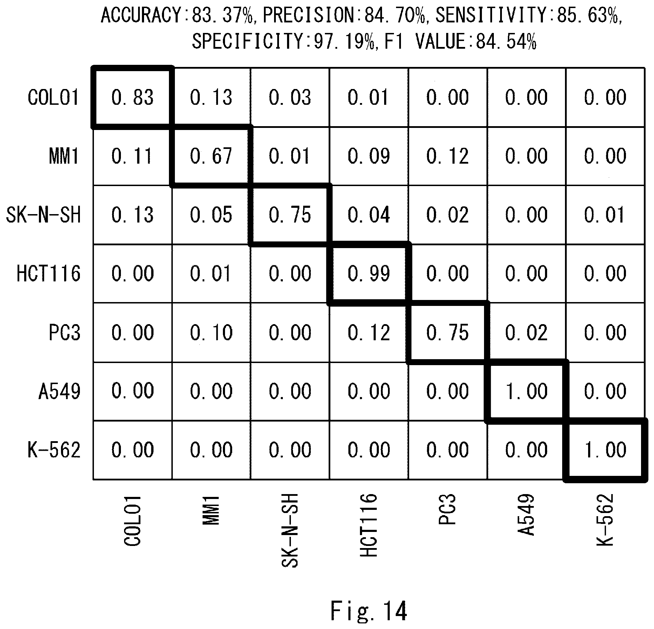

Fig. 14 shows a confusion matrix representing exosome classification performance. In Fig. 14, similarly to Fig. 12, the horizontal axis indicates the expected value, and the vertical axis indicates the correct value. The seven types of exosomes were classified by the above-described classifier using the CNN. Accuracy was 83.37%; Precision was 84.70%; Sensitivity was 85.63%; Specificity was 97.19%; and F1 value was 84.54%. Therefore, even when the object to be measured was a microscopic exosome, it was possible to accurately specify the type of exosome by combining the measurement according to this embodiment and the classification by the CNN classifier.

### Example 7: Classification of Pollen

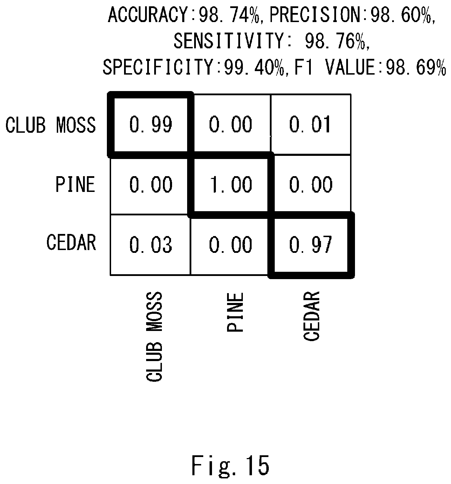

In this example, three types of pollens, i.e., lycophyte, pine, and cedar, were used as objects to be measured. Fig. 15 shows a confusion matrix representing pollen classification performance. The three types of pollens were classified by the above-described classifier using the CNN. Accuracy was 98.74%; Precision was 98.60%; Sensitivity was 98.76%; Specificity was 99.40%; and F1 value was 98.69%. Therefore, even when the object to be measured was a pollen, it was possible to accurately specify the type of pollens by combining the measurement according to this embodiment and the classification by the CNN classifier.

### Second Embodiment

In the first embodiment, the gravity-driven method was described as an example of the method for generating a flow that passes through the microscopic channel 4. However, in the gravity-driven method, when the concentration of objects to be measured 5 dispersed in the sample solution is low, the number of objects to be measured 5 that pass through the microscopic channel 4 decreases, and the moving speed cannot be controlled, so that the precision of the measurement may deteriorate. Further, in order to improve the precision of the measurement, it is necessary to perform the measurement for a long time. Therefore, the throughput of the measurement work deteriorates.

Therefore, in this embodiment, an electrophoresis method in which the number of objects to be measured 5 that pass through the microscopic channel 4 and the moving speed thereof can be adjusted will be described. In this embodiment, a positively or negatively charged objects to be measured 5 are driven by applying a DC (Direct Current) voltage V_{D} between the electrodes 1 and 2.

For example, the signal source 33 of the measurement unit 30 may simultaneously apply the AC voltage V_{AC} for measurement and the DC voltage V_{D} for electrophoresis to the electrodes 1 and 2 in a superimposed manner. In this case, there is no need to separately provide a power supply for applying the DC voltage V_{D}, so that objects to be measured 5 can be driven by the electrophoresis method with a simple structure. However, the method for applying the DC voltage V_{D} is not limited to this example, and the DC voltage V_{D} may be applied between the electrodes 1 and 2 by using separately provided a power supply.

In this way, it is possible to drive objects to be measured 5 in a specific direction by the DC voltage V_{D}, and thereby to make them flow into the microscopic channel 4. Specifically, when objects to be measured 5 are positively charged, the positively-charged objects to be measured 5 can be moved from the electrode 1 to the electrode 2 through the microscopic channel 4 by applying the DC voltage for electrophoresis in such a manner that the electrode 1 serves as the positive electrode and the electrode 2 serves as the negative electrode. Further, when objects to be measured 5 are negatively charged, the negatively-charged objects to be measured 5 can be moved from the electrode 1 to the electrode 2 through the microscopic channel 4 by applying the DC voltage for electrophoresis in such a manner that the electrode 1 serves as the negative electrode and the electrode 2 serves as the positive electrode.

Note that the speed at which the object to be measured 5 passes through the microscopic channel 4 can be adjusted by adjusting the magnitude and time of the DC voltage V_{D} applied to the electrodes 1 and 2. Note that in this embodiment, in principle, the number of objects to be measured 5 that simultaneously pass through the microscopic channel 4 is one.

As described above, according to the electrophoresis method, objects to be measured 5 can be made to flow into the microscopic channel 4 by the DC voltage V_{D} applied between the electrodes 1 and 2 with the number of objects to be measured 5 and the speed thereof with which sufficient precision of the measurement can be ensured.

Further, according to the electrophoresis method, it is possible to move objects to be measured 5 that flow through the microscopic channel 4 in a reciprocated manner by switching the polarity of the DC voltage V_{D} applied between the electrodes 1 and 2. In this way, the precision of the measurement of the object to be measured 5 can be further improved.

Further, the voltage for driving objects to be measured 5 is not limited to the DC voltage. That is, objects to be measured 5 may be moved in a reciprocated manner by applying a driving AC voltage having a frequency lower than that of the AC voltage V_{AC} applied for measuring AC characteristics. Note that the driving AC voltage may be applied simultaneously with the AC voltage V_{AC} applied for measuring the AC characteristics in a superimposed manner.

In this configuration, the driving voltage can be applied by using the electrodes 1 and 2 for applying the AC voltage. Therefore, there is no particular need to add electrodes for applying the driving voltage, so that objects to be measured can be driven by the electrophoresis method without changing the structure of the sensor 10. Further, in the electrophoresis method, it is possible to induce concentration polarization by the driving voltage, and to AC-measure this state, so that the surface potential of the object to be measured 5 can be measured more accurately.

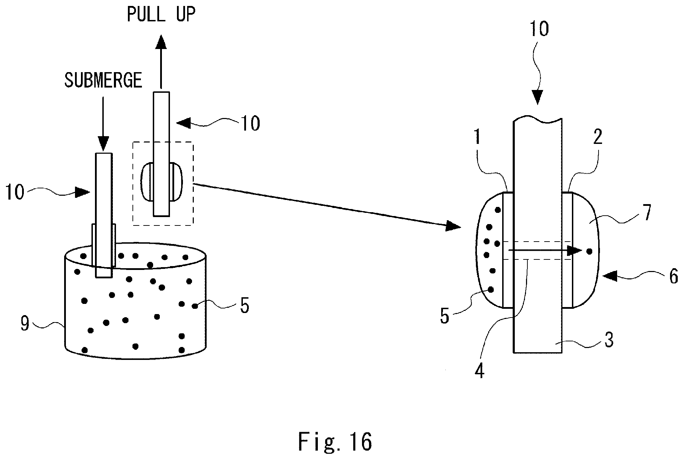

Note that in the gravity-driven method, objects to be measured 5 are driven by the flow of the solvent 7 generated by gravity, so it is described on the assumption that the sensor 10 is held in such a manner that the main surface of the substrate 3 is roughly perpendicular to the vertical direction. However, since objects to be measured 5 can be driven by the DC voltage in the electrophoresis method, the degree of freedom as to how to hold the sensor 10 can be improved. Fig. 16 shows an example as to how to hold the sensor 10 in the electrophoresis method. In the electrophoresis method, as shown in Fig. 16, the sensor 10 may be held, for example, in such a manner that the main surface of the substrate 3 is roughly perpendicular to the horizontal direction. Even in this case, the object to be measured 5 can be made to pass through the microscopic channel 4 in the horizontal direction by applying the DC voltage.

Further, since the sensor 10 can be held as shown in Fig. 16, droplets 6 can be formed more easily. For example, when the sensor 10 is submerged in the sample solution 9 in which objects to be measured 5 are dispersed and then pulled up therefrom, droplets 6 can remain on the inner sides of the ring electrodes 1A and 2A by the difference between the hydrophilicity of the electrodes 1 and 2 and that of the substrate 3. Therefore, the preparation for the measurement can be made more easily and quickly.

Next, an example using the electrophoresis method will be described. Note that although the electrophoresis method is applied, the measurement conditions and the measurement method are similar to those in the example according to the first embodiment.

### Example 8: Electrophoresis Method

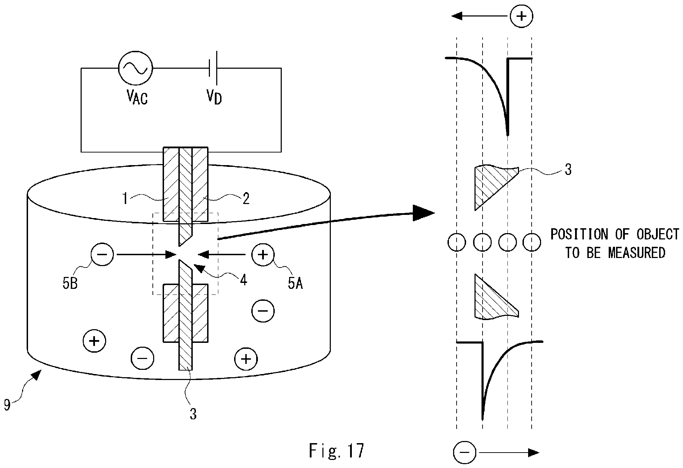

Fig. 17 schematically shows a moving direction of objects to be measured and an observed waveform in an electrophoresis method. The left side of Fig. 17 is a conceptual diagram of the driving of objects to be measured, and shows a moving direction of positively or negatively charged objects to be measured. The right side of Fig. 17 shows a relationship between the positions of objects to be measured in the microscopic channel 4 and the current waveform. As shown on the right side of Fig. 17, since the microscopic channel 4 is formed as a microscopic hole, for example, by a laser beam machine, it is presumed that the shape, e.g., the diameter, of the hole is not uniform. Therefore, in Fig. 17, the microscopic channel 4 is shown as one having a funnel-like shape of which the diameter increases from the left side of the paper to the right side thereof.

In this state, when a positively-charged object to be measured 5A and a negatively-charged object to be measured 5B are driven, the positively-charged object to be measured 5A passes through the microscopic channel 4 in the leftward direction, i.e., in such a manner that it moves from the part of the microscopic channel 4 having a large diameter to the part thereof having a small diameter. Meanwhile, the negatively-charged object to be measured 5B passes through the microscopic channel 4 in the rightward direction, i.e., in such a manner that it moves from the part of the microscopic channel 4 having a small diameter to the part thereof having a large diameter. Therefore, the profile of the AC electric field through which the positively-charged object to be measured 5A passes and the profile of the AC electric field through which the negatively-charged object to be measured 5B passes are reversed with respect to each other. As a result, the waveform of the current value measured for the positively-charged object to be measured 5A and the waveform of the current value measured for the negatively-charged object to be measured 5B are obtained as waveforms which are reversed with respect to each other in regard to the time. Therefore, according to the electrophoresis method, it is possible to simultaneously obtain the moving direction of the measured particle and the positivity/negativity of the zeta potential.

Although an example in which the microscopic channel 4 has a funnel-like shape has been described here, the shape of the microscopic channel 4 is not limited to this example. The microscopic channel 4 may be formed as a cylindrical channel having a uniform diameter, or may have any of various shapes such as an hourglass-shape having a large diameter at both ends and a small diameter at the center.

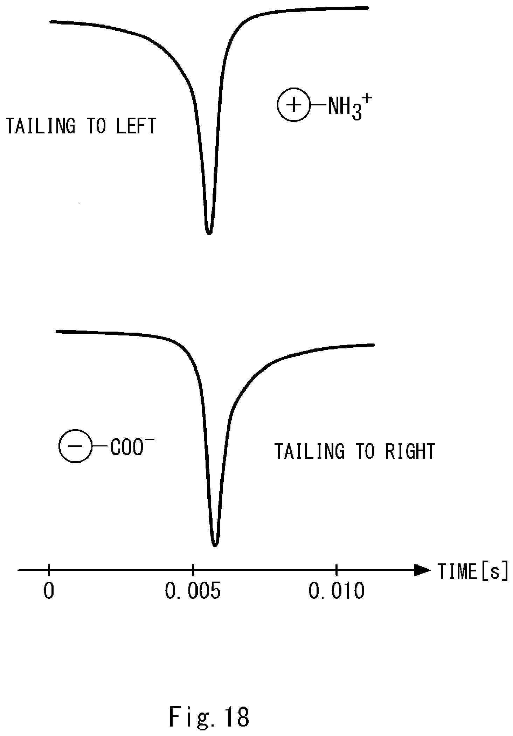

Fig. 18 shows an example of the result of the measurement of the current waveform by the electrophoresis method. In this example, particles which were negatively charged by modifying them with a carboxyl group (-COOH) and have a diameter of 1 µm, and particles which were positively charged by modifying them with an amino group (-NH₂) and have a diameter of 1 µm were dispersed in a sample solution, and then measurement was carried out. It was confirmed that the moving direction of a particle was reversed depending on the polarity of the charging of the particle, so that current waveforms that were reversed with respect to each other in regard to the time were obtained.

### Third Embodiment

In the first and second embodiments, the measurement is performed by depositing droplets 6 on the sensor 10, so that the measurement is performed in a transient manner over a short time. However, in the actual measurement, there are conceivable cases where it is desired to continuously measure objects to be measured dispersed in a larger amount of sample solution (so-called in-situ measurement). Therefore, in this embodiment, a sensor capable of continuously measuring objects to be measured dispersed in a larger amount of sample solution will be described.

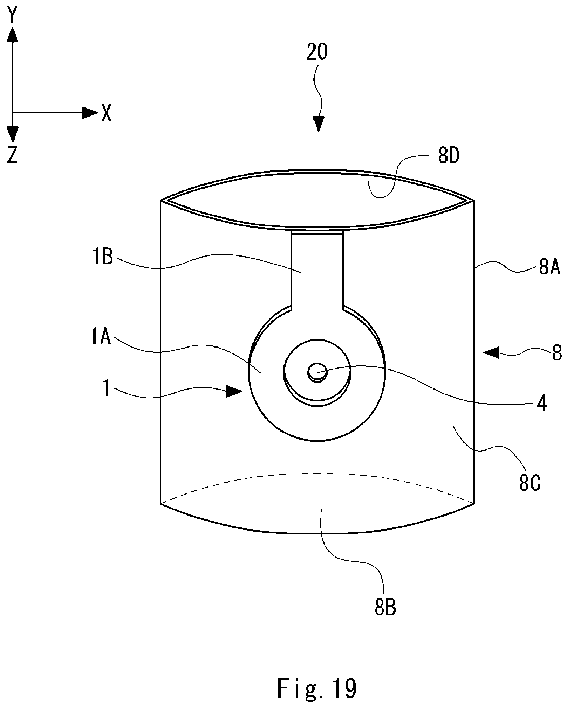

Fig. 19 schematically shows a structure of a sensor 20 according to a third embodiment. The sensor 20 has a structure that is obtained by replacing the substrate 3 of the sensor 10 with a solution holding part 8.

The solution holding part 8 includes a cylindrical part 8A of which the axis is parallel to the vertical direction (Y direction) in the paper, and a bottom part 8B that closes the bottom of the cylindrical part 8A, i.e., closes the end thereof on the -Y side. The cylindrical part 8A and the bottom part 8B can be formed of material similar to that of the substrate 3.

An electrode 1 is formed on an outer surface 8C of the cylindrical part 8A. An electrode 2 is formed on an outer surface 8D of the cylindrical part 8A. A microscopic channel 4 is formed as a hole provided in the cylindrical part 8A so as to be located at the center of the ring electrodes 1A and 2A.

The rest of the structure of the sensor 20 is similar to that of the sensor 10, and therefore redundant description thereof will be omitted.

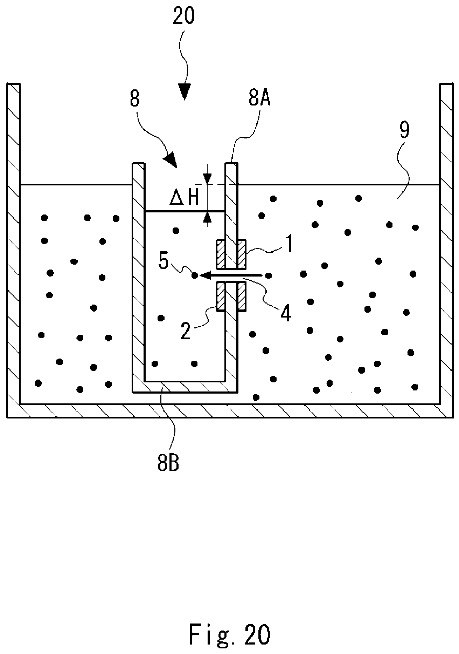

Next, measurement using the sensor 20 will be described. In the sensor 20, the solution holding part 8 can hold a sample solution in a space surrounded by the cylindrical part 8A and the bottom part 8B. Fig. 20 shows how to use the sensor 20. As shown in Fig. 20, by temporarily submerging the sensor 20 in the sample solution 9 and pulling it up in such a manner that the opening of the solution holding part 8 faces upward, the sample solution 9 can be stored in the space surrounded by the cylindrical part 8A and the bottom part 8B in such a manner that the liquid level is higher than the microscopic channel 4. In this state, by submersing the sensor 20 in the sample solution 9 so that the liquid level outside the solution holding part 8 is higher than the liquid level inside the solution holding part 8, a pressure for making the sample solution 9 flow from the outside the solution holding part 8 to the inside the solution holding part 8, and into the microscopic channel 4 is generated by the head difference H between the inside of the solution holding part 8 and the outside thereof. For example, when the head difference H between the inside of the solution holding part 8 and the outside thereof is 3 mm, a pressure of about 30 Pa is generated. Further, since the liquid levels inside and outside the solution holding part 8 are lower than the upper end of the solution holding part 8, the parts of the lead wiring lines 1B and 2B exposed above the liquid levels are electrically insulated by the solution holding part 8. In this way, the measurement of the object to be measured 5 can be performed in the state where the object to be measured 5 passes through the microscopic channel 4.

Next, an example of measurement using the sensor 20 will be described. Note that except for the use of the sensor 20, the measuring conditions and the measuring method are similar to those in the example according to the first embodiment.

### Example 9

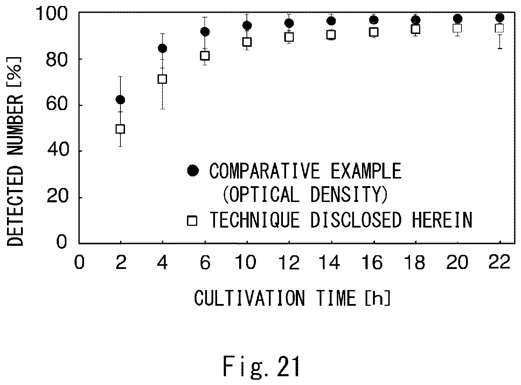

In this example, a culture solution of bacteria (Pediococcus pentosaceus, L4140) was used as the sample solution, and the number of bacteria was measured for two minutes every two hours while the sensor 20 was kept submerged. Fig. 21 is a graph showing the result of the measurement of the number of bacteria. Fig. 21 also shows the optical density of bacteria measured every two hours as a comparative example. As shown in Fig. 21, it was confirmed that, compared with the optical density, the result of the measurement by the sensor 20 could be obtained in a roughly similar trend, although a certain bias was added to the number of detected bacteria.

As described above, according to the sensor 20, it is possible to measure an object to be measured more easily without repeatedly forming droplets in a long time measurement or continuous measurement.

Note that for the sensor 20, the measurement may be performed by using the electrophoresis method as described above in the second embodiment. In the case where the electrophoresis method is applied to the sensor 20, since the object to be measured can be driven by the driving voltage, the heights of the liquid levels inside and outside the solution holding part 8 may be equal to each other.

### Fourth Embodiment

In the above-described embodiments, a sensor in which the ring electrodes 1A and 2A are arranged so as to overlap each other when viewed in the direction along the Z-axis has been described. In this case, the distance between the ring electrodes 1A and 2A in the Z-axis direction becomes short, and as a result, the high-frequency characteristics of the detection of a particle may be affected by the capacitance between the ring electrodes 1A and 2A. Therefore, in this embodiment, a sensor capable of improving the high-frequency characteristics of the detection of a particle will be described.

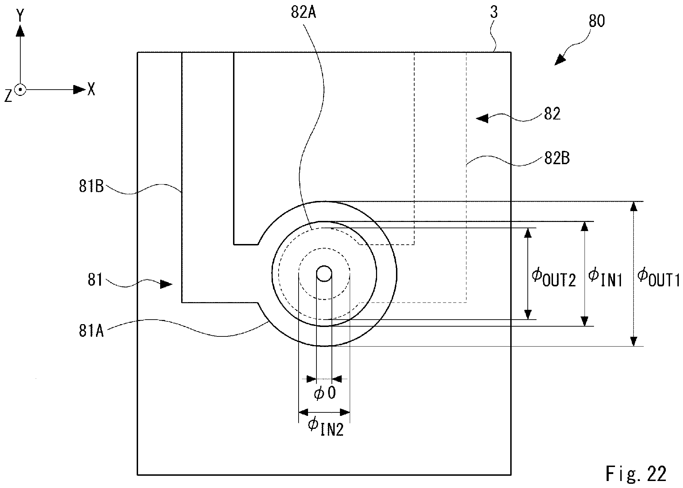

A sensor according to this embodiment will be described. Fig. 22 is a front view schematically showing a structure of a sensor 80 according to a fourth embodiment. As shown in Fig. 22, the sensor 80 has a structure that is obtained by replacing the electrodes 1 and 2 of the sensor 10 with electrodes 81 and 82, respectively.

The electrode 81 includes a ring electrode 81A and a lead wiring line 81B. The ring electrode 81A is a ring-shaped electrode having an inner diameter φ_{IN1} and an outer diameter φ_{OUT1}. The lead wiring line 81B is led out from the outer edge of the ring electrode 81A in the -X direction, and then is bent in the +Y direction and extends to the end of the substrate 3 on the +Y side.

The electrode 82 includes a ring electrode 82A and a lead wiring line 82B. The ring electrode 82A is a ring-shaped electrode concentric with the ring electrode 81A and having an inner diameter φ_{IN2} and an outer diameter φ_{OUT2}. In this structure, the ring electrodes 81A and 82A are designed so that the outer diameter φ_{OUT2} of the ring electrode 82A is smaller than the inner diameter φ_{IN1} of the ring electrode 81A. Therefore, the ring electrode 82A is disposed so as to be included in the ring electrode 81A when viewed in the direction along the Z-axis. The lead wiring line 82B is led out from the outer edge of the ring electrode 82A in the +X direction, and then is bent in the +Y direction and extends to the end of the substrate 3 on the +Y side.

Therefore, in this structure, only a part of the -X side of the ring electrode 81A and a part of the lead wiring line 82B overlap each other when viewed in the direction along the Z-axis.

In this structure, when the sensor 80 is viewed in the direction along the Z-axis, only parts of the electrodes 81 and 82 overlap each other, and the remaining large parts do not overlap each other. Therefore, it is possible to increase the shortest distance between the electrodes 81 and 82 compared with those in the sensors according to the first to third embodiments.

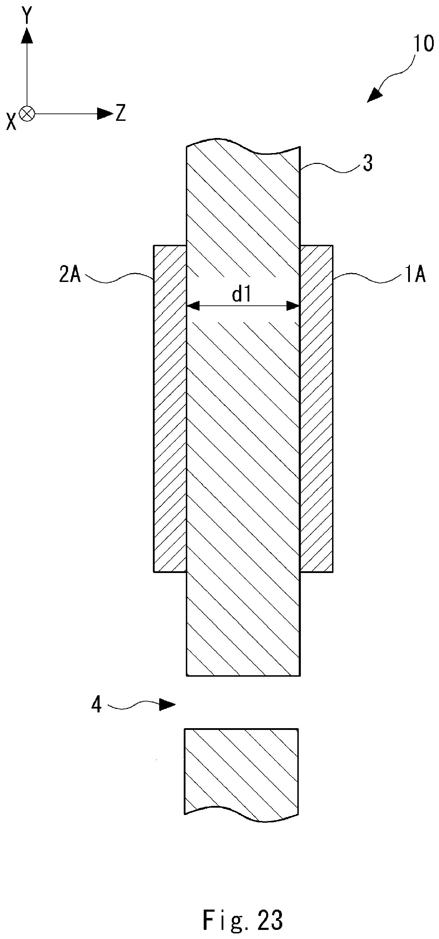

Fig. 23 is a cross-sectional diagram showing the distance between the electrodes of the sensor 10 according to the first embodiment. Fig. 23 shows a cross section of the sensor 10 on the Y-Z plane. In the sensor 10, the ring electrodes 1A and 2A overlap each other when viewed in the Z-axis direction. Therefore, the shortest distance between the ring electrodes 1A and 2A is a distance d1 in a direction parallel to the Z-axis direction.

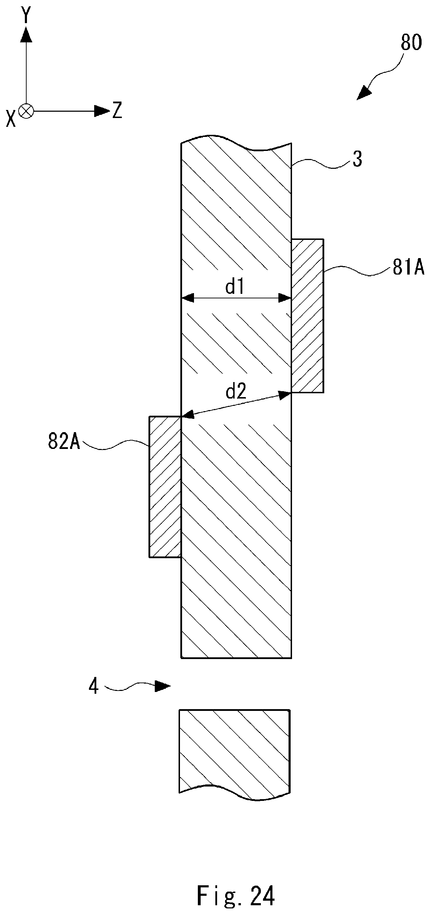

Fig. 24 is a cross-sectional diagram showing the distance between the electrodes of the sensor 80 according to the fourth embodiment. Fig. 24 shows a cross section of the sensor 80 on the Y-Z plane. In the sensor 80, the ring electrodes 81A and 82A are arranged so that they do not overlap each other when viewed in the Z-axis direction. Therefore, the shortest distance between the ring electrodes 81A and 82A is a distance d2 in a direction inclined from the Z-axis direction, i.e., a length of a line segment connecting the inner edge of the ring electrode 81A to the outer edge of the ring electrode 82A. Therefore, it can be understood that since the distance d2 is longer than the distance d1, the capacitance between the electrodes 81 and 82 of the sensor 80 is smaller than the capacitance between the electrodes 1 and 2 of the sensor 10.

Therefore, according to this structure, it is possible to reduce the capacitance between the electrodes 81 and 82 and thereby to improve the frequency characteristic. In this way, it is possible to improve the accuracy of the detection of the sample and improve the accuracy of the identification of the sample.

Note that the ring electrodes are merely an example of the closed annular shape, and may have any of various closed annular shapes such as an ellipse, an oval, and a polygon in addition to the regular circle.

Further, each of the electrodes 81 and 82 may be disposed on either of both ends of the microscopic channel 4. That is, each of the electrodes 81 and 82 may be disposed on either of the two surfaces of the substrate 3. For example, when the microscopic channel 4 has a funnel-like shape as shown in Fig. 17, the electrode 81 may be disposed on the side of the microscopic channel 4 having a larger diameter, and the electrode 82 may be disposed on the side of the microscopic channel 4 having a smaller diameter. Alternatively, the electrode 81 may be disposed on the side of the microscopic channel 4 having a smaller diameter, and the electrode 82 may be disposed on the side of the microscopic channel 4 having a larger diameter.

### Fifth Embodiment

The fourth embodiment has been described on the assumption that electrodes each having a closed annular shape are provided in the sensor. In contrast, in this embodiment, a sensor in which the capacitance between the two electrodes respectively provided on both surfaces of the substrate 3 can be further reduced by changing the shapes of the electrodes will be described.

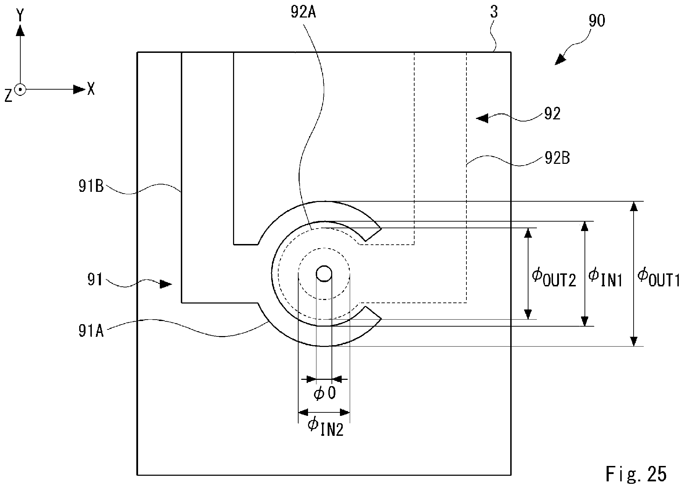

A sensor according to this embodiment will be described. Fig. 25 is a front view schematically showing a structure of a sensor 80 according to a fifth embodiment. As shown in Fig. 25, the sensor 90 has a structure that is obtained by replacing the electrodes 81 and 82 of the sensor 80 with electrodes 91 and 92, respectively.

The electrode 91 includes a C-shaped electrode 91A and a lead wiring line 91B. The C-shaped electrode 91A is formed as an electrode having an inner diameter φ_{IN1} and an outer shape φ_{OUT1} equal to those of the ring electrode 81A. The C-shaped electrode 91A is an electrode having a shape of letter C in which a part on the +X side is removed as compared with the ring electrode 81A, i.e., is an electrode having a shape of an opened ring. The lead wiring line 91B has a structure similar to that of the lead wiring line 81B, and therefore redundant description thereof will be omitted.

The electrode 92 includes a ring electrode 92A and a lead wiring line 92B. Since the ring electrode 92A and the lead wiring line 92B have structures similar to those of the ring electrode 82A and the lead wiring line 82B, respectively, redundant descriptions thereof will be omitted.

In this structure, when the sensor 90 is viewed in the direction along the Z-axis, the +X side of the C-shaped electrode 91A is opened so as not to overlap (i.e., interfere) with the ring electrode 92A. In this way, the electrodes 91 and 92 are provided in such a manner that any parts of them do not overlap each other when the sensor 90 is viewed in the direction along the Z-axis. Therefore, it is possible to further increase the shortest distance between the electrodes 91 and 92 compared with that in the sensor 80 according to the fourth embodiment. As a result, it is possible to further reduce the capacitance between the electrodes 91 and 92 and thereby to improve the frequency characteristic. In this way, it is possible to further improve the accuracy of the detection of the sample and further improve the accuracy of the identification of the sample.

Note that the ring electrodes are merely an example of the annular shape in which a part thereof is opened, and may have any of various closed annular shapes such as an ellipse, an oval, and a polygon in addition to the regular circle. Further, the C-shaped electrodes are merely an example of the opened annular shape, and may have any of various annular shapes such as an ellipse, an oval, and a polygon in addition to the regular circle.

### Other Embodiments

The present disclosure has been described above with reference to the embodiments, but the present disclosure is not limited to the above-described embodiments. The structure and details of the present disclosure may be modified in various ways that could be understood by those skilled in the art within the scope of the present disclosure. Further, the embodiments may be combined with one another as appropriate.

The above-described embodiments have been described on the assumption that the electrodes are formed of silver, but this is merely an example. For example, various metals such as gold and platinum may be used, and more preferably, electrochemically stable metals such as noble metals are used. Further, the electrodes may be formed of any of various conductors such as organic conductive materials. Further, the electrodes may be formed by using nano-ink or the like in which a metallic material is dispersed.

The above-described embodiments have been described on the assumption that the substrates and the solution holding parts are formed of polyimide, but this is merely an example. For example, the substrate and the solution holding part may be formed of any of various resins such as fluorocarbon resins such as Teflon (Registered Trademark), engineering plastics such as polycarbonate and PEEK (polyetheretherketone); or any of various dielectrics such as rubber and elastomer.

The second embodiment has been describing on the assumption that the droplets 6 are formed in the sensor 10 and then the measurement is performed, but this is merely an example. For example, similar to the sensor 20 according to the third embodiment, continuous measurement (in-situ measurement) can be performed by using the sensor 10. In this case, the continuous measurement (in-situ measurement) can be performed by submersing the sensor 10 in the sample solution in such a manner that parts of the lead wiring lines 1B and 2B are exposed above the liquid surface of the sample solution, and connecting the wiring lines 51 and 52 to the exposed parts of the lead wiring lines 1B and 2B.

The specification (i.e., identification) of the object to be measured is not limited to those in the above-described examples in which the current value and the phase of the AC signal are used. For example, the signal processing unit 40 may be configured so as to obtain the combined impedance and the phase from the result of the measurement by the measurement unit 30 and then specify (i.e., identify) the object to be measured by using the obtained combined impedance and the phase. For example, the signal processing unit 40 may obtain, by using the combined impedance and the phase, parameters corresponding to the resistance component, the zeta potential, and the dielectric constant of the object to be measured 5, respectively, and then specify the object to be measured 5 by using the obtained parameters corresponding to the resistance component, the zeta potential, and the dielectric constant. In this case, for example, the object to be measured 5 may be specified by mapping the parameters corresponding to the resistance component, the zeta potential, and the dielectric constant of the object to be measured 5 on a three-dimensional coordinate system in which the three axes represent the resistance component, the zeta potential, and the dielectric constant, respectively. Note that the parameter corresponding to the resistance component is a parameter corresponding to the size of the object to be measured 5. The parameter corresponding to the zeta potential is a parameter corresponding to the surface potential of the object to be measured 5. The parameter corresponding to the dielectric constant is a parameter corresponding to the structure of the object to be measured 5, such as the spherical shell structure and the membrane capacitance, or a parameter corresponding to the material of the object to be measured 5.

Since the size, the surface potential, and the structure of the object to be measured 5 differ from one object to be measured to another, the object to be measured 5 can be classified by obtaining the resistance component, the zeta potential, and the dielectric constant, which are parameters corresponding to the aforementioned parameters, and mapping these parameters corresponding to the resistance component, the zeta potential, and the dielectric constant of the object to be measured 5 on the three-dimensional coordinate system. For example, it is possible to improve the accuracy of the specification (i.e., identification) of the object to be measured 5 by mapping the results of the measurements of a plurality of types of objects to be measured 5 on the three-dimensional coordinate system and thereby accumulating data thereon.

The above-described embodiments have been described on the assumption that the electrodes 1 and 2 have the same shape as each other when viewed along the longitudinal direction of the microscopic channel 4, i.e., when viewed along the Z direction, but this is merely an example. The electrodes 1 and 2 may have different shapes as long as the AC characteristics at the time when the object to be measured passes through the microscopic channel 4 can be measured.

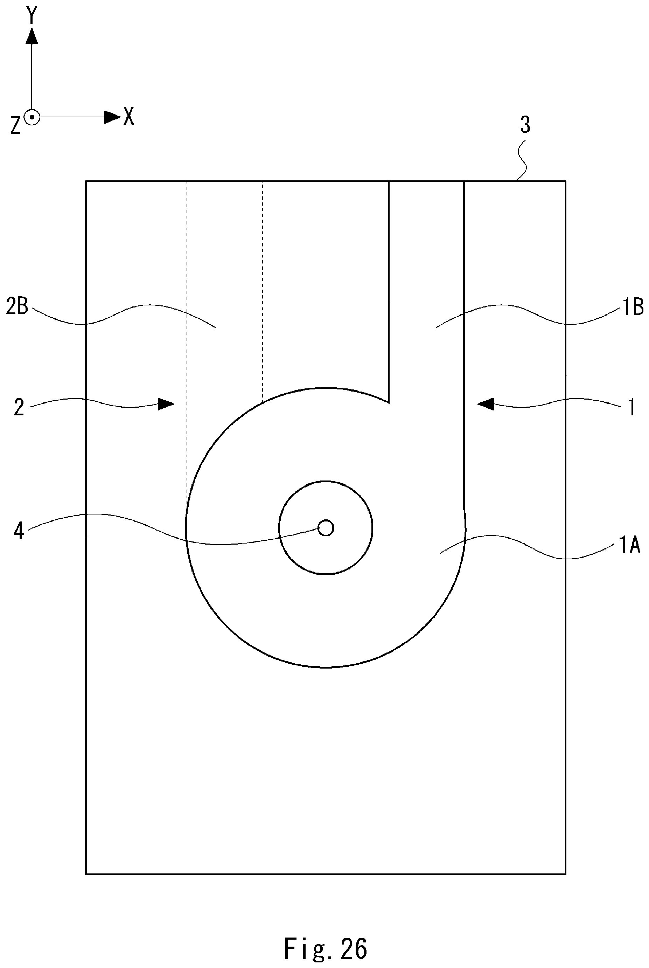

For example, the lead wiring line 1B of the electrode 1 and the lead wiring line 2B of the electrode 2 may be arranged at different positions when viewed along the longitudinal direction of the microscopic channel 4, i.e., when viewed along the Z direction. Fig. 26 shows a first modified example of the arrangement of the electrodes 1 and 2. Fig. 26 shows the arrangement when viewed in a direction in which the electrode 1 is on the front side and the electrode 2 is on the back side. Further, the electrode 1 is indicated by a solid line and the electrode 2 is indicated by a broken line. In this example, the lead wiring line 1B of the electrode 1 and the lead wiring line 2B of the electrode 2 are provided at positions shifted from each other in the X direction, i.e., the horizontal direction of the paper. In this way, the leak current between the lead wiring lines 1B and 2B can be suppressed by arranging the lead wiring lines 1B and 2B away from each other, so that the precision of the measurement of the AC characteristics can be improved.

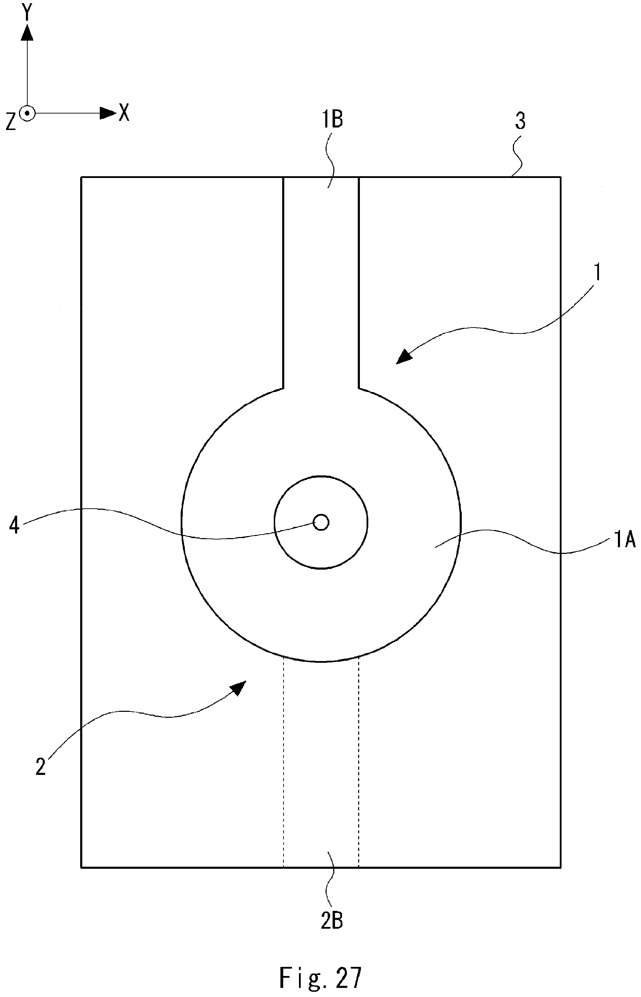

Fig. 27 shows a second modified example of the arrangement of the electrodes 1 and 2. The observation direction and the display method for the electrodes in Fig. 27 are similar to those in Fig. 26. In this example, the lead wiring line 1B is provided so as to extend from the ring electrode 1A to the +Y side, and the lead wiring line 2B is provided so as to extend from the ring electrode 2A to the -Y side. That is, the lead wiring lines 1B and 2B are provided so as to extend in directions opposite to each other, i.e., in directions rotated by 180° around the center of the ring electrodes. In this case, the leakage current between the lead wiring lines 1B and 2B can be further suppressed by arranging the lead wiring lines 1B and 2B further away from each other. Therefore, even in this structure, the precision of the measurement of the AC characteristics can be improved.

The arrangements of the lead wiring lines shown in Figs. 26 and 27 are merely examples, and other arrangements may be adopted as long as the lead wiring lines 1B and 2B can be arranged away from each other. For example, the lead wiring lines 1B and 2B may be arranged away from each other in a direction different from the horizontal direction of the paper. Further, the lead wiring lines 1B and 2B may radially extend in directions rotated by angles larger or smaller than 180 degrees. Further, one or both of the lead wiring lines 1B and 2B may be curved wiring lines or bent in arbitrary directions so that the lead wiring lines 1B and 2B are arranged away from each other.

The above-described embodiments have been described on the assumption that each of the two electrodes provided in the sensor is made of a plate-like conductive member, but the electrodes are not limited to this example. For example, the electrodes may be made of a conductive porous member rather than a dense conductive member.

Further, the above-described embodiments have been described on the assumption that the sample is detected in the state where an AC voltage is applied to the sensor, but the detection of the sample is not limited to this example. It is also possible to detect the sample in a state where a DC voltage is applied to the sensor according to the above-described embodiment.

The above-described embodiments have been described on the assumption that objects to be measured are dispersed in the sample solution, but this is merely an example. The objects to be measured may be transported by other methods as long as they can pass through the channel extending between the two electrodes. For example, objects to be measured may be dispersed in a gas and are made to pass through the channel by a flow of the gas.

Further, the object to be measured may be present in a vacuum or an atmosphere that is so dilute as to be regarded as a vacuum. Even in this case, the object to be measured may be made to pass through the channel by applying a driving DC voltage, a driving AC voltage, or a combination thereof to the object to be measured and thereby driving it. In this case, the sensors according to the above-described embodiments may be used, for example, in outer space. The sensors according to the above-described embodiments may be applied to the measurement of microscopic objects to be measured, such as dust, or relatively large objects to be measured, such as rocks or space debris, in outer space. Further, the sensors according to the above-described embodiments may also be used in a vacuum chamber of any of various vacuum apparatuses such as a measuring apparatus or a manufacturing apparatus. In this way, the behavior of microscopic objects in the vacuum chamber may be measured.

The above-described embodiments have been described on the assumption that the measurement unit measures a voltage by using a lock-in amplifier, but this is merely an example. The measurement unit may have any structure as long as it can measure a voltage between two electrodes.

In the above-described embodiments, the object to be measured may be biological particles, inorganic particles, or organic particles. Further, the biological particles may include a virus, a mycoplasma, bacteria, an exosome, a viroid, an obelisk, a biomolecule, a cell, and/or an extracellular vesicle.

In the above-described embodiments, a model using a CNN constructed by machine learning is used for the classification of the object to be measured, but this is merely an example. For example, an arbitrary model such as a model using a network other than the CNN may be applied.

Although the present disclosure has been described with the above-described embodiments, the present disclosure is not limited to the configurations of the above-described embodiments. Further, needless to say, the present disclosure includes various modifications, corrections, and combinations that can be made by a person skilled in the art within the scope of the claims.

This application is based upon and claims the benefit of a priority from Japanese patent application No. 2023-185427, filed on October 30, 2023, the disclosure of which is incorporated herein in its entirety by reference.

### Reference Signs List

1, 2, 81, 82, 91, 92 ELECTRODES
1A, 2A, 81A, 82A, 92A RING ELECTRODES
1B, 2B, 81B, 82B, 91B, 92B DRAWER WIRING
3 SUBSTRATE
3A, 3B SURFACE
4 MICROCHANNEL
5, 5A, 5B OBJECT TO BE MEASURED
6 DROPLET
7 SOLVENT
8 SOLUTION HOLDING PART
8A CYLINDRICAL PART
8B BOTTOM
8C, 8D SURFACE
9 SAMPLE SOLUTION
10, 20, 80, 90 SENSOR
30 MEASUREMENT UNIT
31, 32 TERMINAL
33 SIGNAL SOURCE
34 LOCK-IN AMPLIFIER
40 SIGNAL PROCESSING UNIT
51, 52, 61, 62 WIRING LINE
70 SOLUTION HOLDING STRUCTURE
71, 72 SOLUTION HOLDING MEMBER
91A C-SHAPED ELECTRODE
100 MEASUREMENT SYSTEM
IN1, IN2 INPUT TERMINAL
OUT1, OUT2 OUTPUT TERMINAL

## Claims

1. A sensor comprising:
a dielectric member;
a first electrode formed on a first surface of the dielectric member and made of conductive material;
a second electrode formed on a second surface of the dielectric member and made of conductive material; and
a channel formed in the dielectric member, through which an object to be measured can pass in a first direction intersecting the first and second surfaces of the dielectric member and to which a voltage for measurement can be applied in the first direction by the first and second electrodes, wherein
the object to be measured is specified based on an electrical characteristic of the object to be measured at the time when the object to be measured has passed through the channel in a state where the voltage for measurement is applied thereto.

2. The sensor according to claim 1, wherein
the first electrode is an electrode including an opened or closed shaped part surrounding an end of the channel on the first surface, and
the second electrode is an electrode including an opened or closed shaped part surrounding an end of the channel on the second surface.

3. The sensor according to claim 2, wherein
the first electrode includes a first opened or closed annular shape part surrounding the end of the channel on the first surface, and
the second electrode includes a second opened or closed annular shape part surrounding the end of the channel on the second surface.

4. The sensor according to claim 3, wherein
the first electrode includes a first lead wiring line extending from an outer edge of the first annular shape part,
the second electrode includes a second lead wiring line extending from an outer edge of the second annular shape part, and
the first and second lead wiring lines are arranged so that they do not overlap each other when viewed along a direction perpendicular to the first and second surfaces.

5. The sensor according to claim 3, wherein the first and second annular shape parts are arranged so that they do not overlap each other when viewed in a direction perpendicular to the first and second surfaces.

6. The sensor according to claim 5, wherein a distance from the channel to the outer edge of the second annular shape part is shorter than a distance from the channel to an inner edge of the first annular shape part when viewed in the direction perpendicular to the first and second surfaces.

7. The sensor according to claim 6, wherein
the first electrode includes a first lead wiring line extending from the outer edge of the first annular shape part,
the second electrode includes a second lead wiring line extending from the outer edge of the second annular shape part,
the first annular shape part is formed as an opened ring, and
the first annular shape part and the second lead wiring line are arranged so that the second lead wiring line passes through an opened part of the ring of the first annular shape part when viewed in the direction perpendicular to the first and second surfaces.

8. The sensor according to claim 1 or 2, wherein
the voltage for measurement is an AC voltage, and
the electrical characteristic of the object to be measured is an AC characteristic.

9. The sensor according to claim 8, wherein a frequency of the AC voltage is 100 MHz or lower.

10. The sensor according to claim 8, wherein the object to be measured is driven along a direction in which the channel extends by further applying a DC voltage between the first and second electrodes.

11. The sensor according to claim 8, wherein the object to be measured is driven along a longitudinal direction of the channel by applying a DC voltage of which a polarity is periodically reversed between the first and second electrodes.

12. The sensor according to claim 8, wherein the object to be measured is driven along a longitudinal direction of the channel by applying a driving AC voltage having a frequency lower than that of the AC voltage for measurement between the first and second electrodes.

13. The sensor according to claim 1 or 2, wherein the dielectric member is formed as a plate-like member.

14. The sensor according to claim 1 or 2, wherein the object to be measured is dispersed in a solvent of a sample solution.

15. The sensor according to claim 14, wherein each of the first and second electrodes comprises:
an electrode part submerged in the sample solution so that the channel is below a liquid surface of the sample solution, and
a wiring part connected to the electrode part and used for applying a voltage and measuring the electrical characteristic.

16. The sensor according to claim 14, wherein
the first electrode is configured so as to be able to hold a droplet of the sample solution on the end of the channel surrounded by the first electrode by surface tension, and
the second electrode is configured so as to be able to hold a droplet of the sample solution on the end of the channel surrounded by the second electrode by surface tension.

17. The sensor according to claim 14, wherein
the dielectric member comprises a cylindrical member and a bottom part closing one end of the cylindrical member, and
the first surface is an outer surface of the cylindrical member and the second surface is an inner surface of the cylindrical member.

18. The sensor according to claim 17, wherein
the first and second electrodes are submerged in the sample solution so that the channel is below a liquid surface of the sample solution and a part of the first electrode and a part of the second electrode are exposed above the liquid surface of the sample solution,
a height of the liquid surface of the sample solution outside the cylindrical member and that of the liquid surface of the sample solution inside the cylindrical member are equal to each other or different from each other, and
applying a voltage to the first and second electrodes and measuring the electrical characteristic are performed through the parts of the first and second electrodes exposed above the liquid surface.

19. The sensor according to claim 1 or 2, wherein
the object to be measured includes a biological particle, an inorganic particle, and an organic particle, and
the biological particle includes at least a virus, a mycoplasma, bacteria, an exosome, a viroid, an obelisk, a biomolecule, a cell, and an extracellular vesicle.

20. The sensor according to claim 1 or 2, wherein a change in current value and a change in phase are obtained by using the measured electrical characteristic, and the object to be measured is specified by using the obtained change in current value and the change in phase.

21. The sensor according to claim 1 or 2, wherein the object to be measured is specified based on an output of a model, the model having been constructed by performing supervised learning using, as teacher data, electrical characteristics of objects to be measured for learning measured in advance and information specifying the objects to be measured for learning, and the output of the model being obtained by inputting the measured electrical characteristic to the model.

22. A measurement system comprising:
a sensor configured to measure an object to be measured;
a measurement unit configured to measure an electrical characteristic of the object to be measured by applying an AC voltage for measurement to the sensor; and
a processing unit configured to specify the object to be measured based on the electrical characteristic measured by the measurement unit, wherein
the sensor comprises:
a dielectric member;
a first electrode formed on a first surface of the dielectric member and made of conductive material;
a second electrode formed on a second surface of the dielectric member and made of conductive material; and
a channel formed in the dielectric member, through which an object to be measured dispersed in a solvent of a sample solution in contact with the first and second surfaces of the dielectric member can pass and to which the voltage for measurement can be applied in a first direction intersecting the first and second surfaces by the first and second electrodes, and
the object to be measured is specified based on an electrical characteristic of the object to be measured at the time when the object to be measured has passed through the channel in a state where the voltage for measurement is applied thereto.

23. A measurement method comprising:
applying a voltage for measurement to a channel formed in a dielectric member, through which an object to be measured dispersed in a solvent of a sample solution in contact with a first surface and a second surface of the dielectric member can pass, by a first electrode formed on the first surface of the dielectric member and made of conductive material and a second electrode formed on the second surface of the dielectric member and made of conductive material in a first direction intersecting the first and second surfaces, and
specifying the object to be measured based on an electrical characteristic of the object to be measured at the time when the object to be measured has passed through the channel in a state where the voltage for measurement is applied thereto.
